# EUROPEAN PATENT APPLICATION

(11) **EP 1 808 752 A2**
(43) Date of publication of application: **18.07.2007**
(21) Application number: 06077096.3
(22) Date of filing: 24.11.2006
(51) Int. Cl.: G06F 3/033

(54) **Display apparatus to generate a signal representing a state of battery of input device, and method thereof**

(30) Priority: 19.12.2005 KR 20050125632
(71) Applicant: Samsung Electronics Co., Ltd., Suwon-si Gyeonggi-do (KR)
(72) Inventor: Kim, Dae-jung, Seongdong-gu, Seoul (KR)
(74) Representative: Hylarides, Paul Jacques

(57) **Abstract**

A display system includes a display part; an input device to generate a position signal on the display part, a sensor part to receive the position signal from the input device, and a controller to display a warning message when intensity of the position signal from the sensor part is less than a predetermined reference level, so that a user properly recharges or replaces the battery of the input device with a new one.

## Description

### CROSS-REFERENCE TO RELATED APPLICATIONS

This application claims priority under 35 U.S.C. §119(a) from Korean Patent Application No.2005-0125632, filed on December 19, 2005, in the Korean Intellectual Property Office, the disclosure of which is incorporated herein in its entirety by reference.

### BACKGROUND OF THE INVENTION

### Field of the Invention

The present general inventive concept relates to a display system, and more particularly, to a display apparatus to indicate information on a battery to operate an input device generating a signal, and a method thereof.

### Description of the Related Art

U.S. Patent No. 4,814,552 discloses an input device generating a position signal by using a signal such as a supersonic wave signal.

Korean Patent Publication No. 2002-0-073028 and Korean Utility Model Registration No. 20-0305086 disclose methods for displaying a position of a pen mouse by using a supersonic wave signal and an infrared ray signal.

Also, U.S. Patent Application Publication No. 2004/0201580A1 discloses a display system comprising an input apparatus generating a supersonic wave signal and a sensor part receiving the signal to display a position of the input apparatus.

However, as the input apparatus described above is operated by using a battery, there may be a problem that the input apparatus does not operate properly when the battery is discharged out. Then, a user may think that the product becomes deteriorated. Also, the user may not properly perform a desired work through the input apparatus as the user cannot exactly recognize the time for replacing or recharging of the battery.

### SUMMARY OF THE INVENTION

The present general inventive concept provides a display apparatus enabling a user to properly recharge or replace a battery of an input device by displaying information on the battery of the input device.

Additional aspects of the present general inventive concept will be set forth in part in the description which follows and, in part, will be obvious from the description, or may be learned by practice of the general inventive concept.

The foregoing and/or other aspects of the present general inventive concept may be achieved by providing a display apparatus usable with an input device, comprising: a display part; an input device to generate a position signal on the display part; a sensor part to receive the position signal from the input device; and a controller to display a warning message when intensity of the position signal from the sensor part is less than a predetermined reference level.

According to the exemplary embodiment of the present invention, the controller further comprises a second controller to receive the signal from the sensor part, and to generate and output position data about the input device.

According to the exemplary embodiment of the present invention, the position signal comprises at least one of a supersonic wave signal and an infrared ray signal generated by the input device.

According to the exemplary embodiment of the present invention, the controller receives position data from the sensor part and displays the warning message on the display part according to the position data when the intensity of the position signal is less than the predetermined reference level.

According to the exemplary embodiment of the present invention, the input device comprises a battery and the warning message represents information about a battery capacity of the battery of the input device.

According to the exemplary embodiment of the present invention, the display apparatus further comprises: an OSD part to display the warning message outputted from the controller.

According to the exemplary embodiment of the present invention, the display part comprises a protecting window with which the input device contacts to generate the position signal.

The foregoing and/or other aspects of the present general inventive concept may also be achieved by providing a display system usable with an input device and a display apparatus, including a sensor part to receive a position signal generated from an external input device, and a controller to generate a warning message when intensity of the received position signal from the sensor part is less than a predetermined reference level.

The foregoing and/or other aspects of the present general inventive concept may also be achieved by providing a method of a display system usable with an input device, the method including receiving a position signal generated from an external input device, and generating a warning message when intensity of the received position signal from the sensor part is less than a predetermined reference level.

### BRIEF DESCRIPTION OF THE DRAWINGS

The above and/or other aspects and advantages of the present general inventive concept will become apparent and more readily appreciated from the following description of the exemplary embodiments, taken in conjunction with the accompany drawings, in which:
FIG. 1 is a perspective view illustrating a display system according to an embodiment of the present general inventive concept;
FIG. 2 is a front view illustrating an operation of a display part of the display system of FIG. 1;
FIGS. 3 and 4 are block diagrams illustrating the display system of FIG. 1; and
FIGS. 5 and 6 are views illustrating an operating condition of a display part of the display system of FIG.1.

### DETAILED DESCRIPTION OF THE EXEMPLARY EMBODIMENTS

Reference will now be made in detail to the embodiments of the present general inventive concept, examples of which are illustrated in the accompanying drawings, wherein like reference numerals refer to like elements throughout. The embodiments are described below so as to explain the present general inventive concept by referring to the figures.

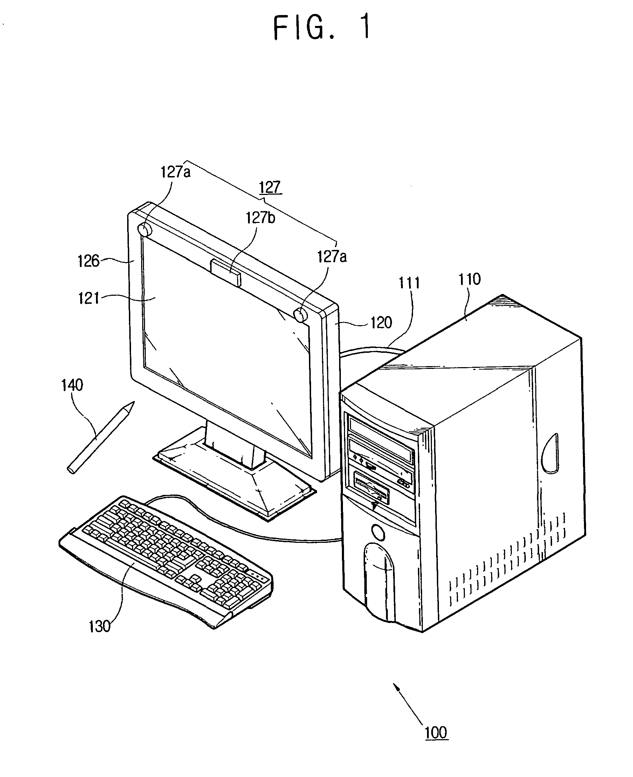

FIG. I is a perspective view illustrating a display system according to an embodiment of the present general inventive concept. Referring to FIG. 1, the display system includes a display apparatus 120. The display system may comprise a computer 100having a main body 110 electrically connected to the display apparatus 120 through a signal line 111, and a key board 130 as an input device. The input device may be further provided with a cable or radio mouse. The display apparatus 120 may comprise an LCD monitor.

The display system according to the present embodiment further comprises a pen mouse 140 as another input device to generate a supersonic wave signal and an infrared ray signal, a protecting window 126 provided in a front side of a display part 121 in the display apparatus 120 and a sensor part 127 to receive the supersonic wave signal and the infrared ray signal from the pen mouse 140. The sensor part 127 comprises supersonic wave sensors 127a attached to opposite sides of an upper surface of the protecting window 126 and an infrared ray sensor 127b attached to a center region of the upper surface thereof.

The supersonic wave sensor and the infrared ray sensor may be integrally formed, and in this case, the sensor part 127 may be installed only on the opposite sides of the upper surface of the protecting window 126.

The display part 121 which is provided as the LCD monitor, comprises an LCD panel and a signal processing part (not shown), such as a scaler and etc., which is provided in the LCD panel and processes a video signal inputted in the computer 100 and to be displayed on the display part 121.

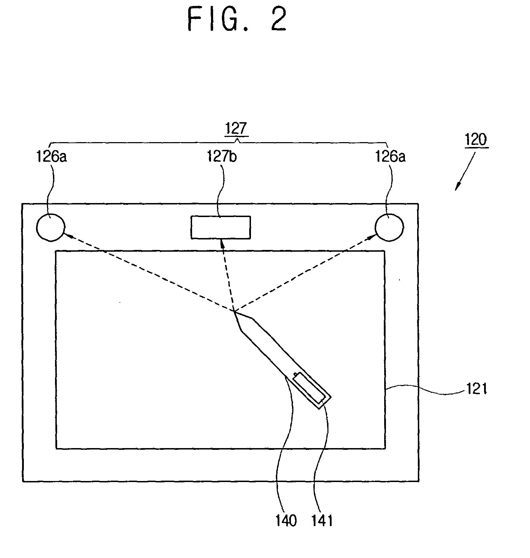

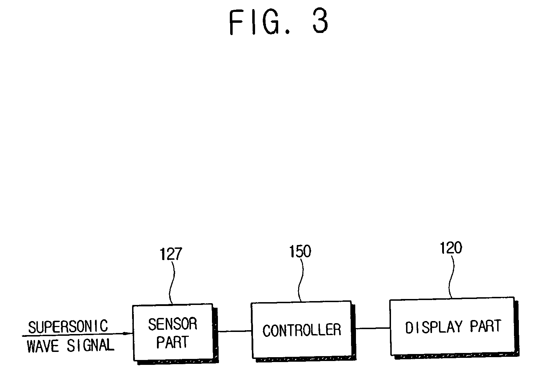

As illustrated in FIGS. 1 and 2, the pen mouse 140 may include a supersonic wave generating unit (not shown) to generate the supersonic wave signal, an infrared ray generating unit (not shown) to generate the infrared ray signal, and the battery (141). The supersonic wave signal and the infrared ray signal generated from the pen mouse 140 are transmitted to the sensor part 127, and then the signals received to the sensor part 127 are transmitted to a controller 150 (see FIG. 3) built in the display apparatus 120. The controller 150 operates to display a position of the pen mouse 140 on the display part 121according to the supersonic wave signal and the infrared ray signal. Then, the controller 150 indicates a position corresponding to the position of the pen mouse 140 with an arrow, etc.

FIG. 3 is a control block diagram illustrating the display system of FIG. 1 to display a position of the pen mouse 140 on the display part 121 by using the computer 100 of FIG. 1 as described above.

If the pen mouse 140 generates position signals, such as the supersonic wave signal and the infrared ray signal, on the protecting window 126, the sensor part 127 receives the generated position signals. The supersonic wave signal and the infrared ray signal received by the sensor part 127 are transmitted to the controller 150, and then the controller 150 displays the position of the pen mouse 140 on the display part 121 on the basis of the transmitted signals.

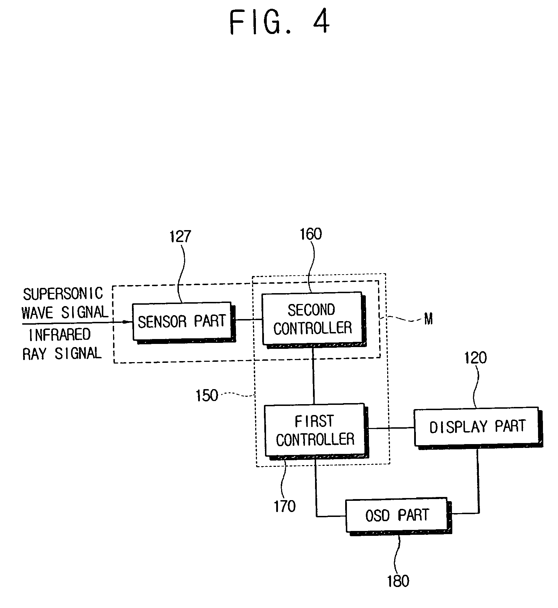

Meanwhile, a separate controller may be provided to sense the position of the pen mouse 140. That is, as illustrated in FIG. 4, the controller 150 includes a first controller 170 and a second controller 160. When the supersonic wave signal and the infrared ray signal received by the sensor part 127 are transmitted to the second controller 160, the second controller 160 performs an operation about the position of the pen mouse 140 through a pre-inputted predetermined program. Position data generated from the operation of the second controller 160 are transmitted to the first controller 170, and then the first controller 170 displays the position of the pen mouse 140 on the display part 121 on the basis of the position data.

In this case, the sensor part 127 and the second controller 160 may be provided as a position sensing module M to sense the position of the pen mouse 140 according to at least one of the supersonic wave signal and the infrared ray signal. Also, the second controller 160 may be installed on one side of the display part 120 with the sensor part 127, or may be installed on the main body 110 of the computer 100 with the first controller 170. When the second controller 160 is installed on the main body 110 of the computer 100 with the first controller 170, the second controller 160 receives the position signal from the sensor part 127 through the signal line 111, and the first controller 170 transmits the position data to the display apparatus to control the display part 121 to display the position of the pen mouse 140.

Meanwhile, the pen mouse 140 may be built with the battery 141 as illustrated in FIG. 2 to supply an electric power to generate the supersonic wave signal and the infrared ray signal. Accordingly, in a case that the pen mouse 140 is operated by the built-in battery 141, there is needed an informing unit to inform a user of a state of the battery 141, that is, whether a remaining capacity of the battery 141 is insufficient.

For this purpose, the informing unit according to the present embodiment as illustrated in FIG. 3, displays a warning message informing lack of the remaining capacity of the battery 141 of the pen mouse 140 on the display part 121 as an OSD. In a case that the intensity of the supersonic wave signal or the infrared ray signal of the pen mouse 140 received to the sensor 127 and then measured by the first controller 150, is less than a predetermined reference level. Through the warning message, a user can take proper actions such as replacing or recharging the battery 141.

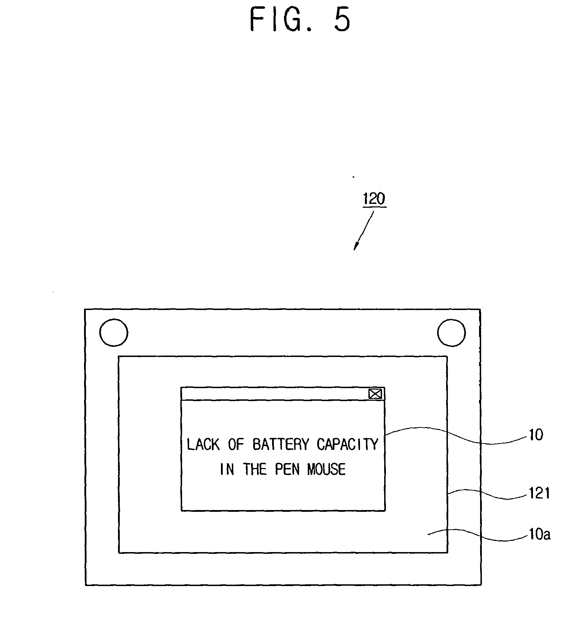

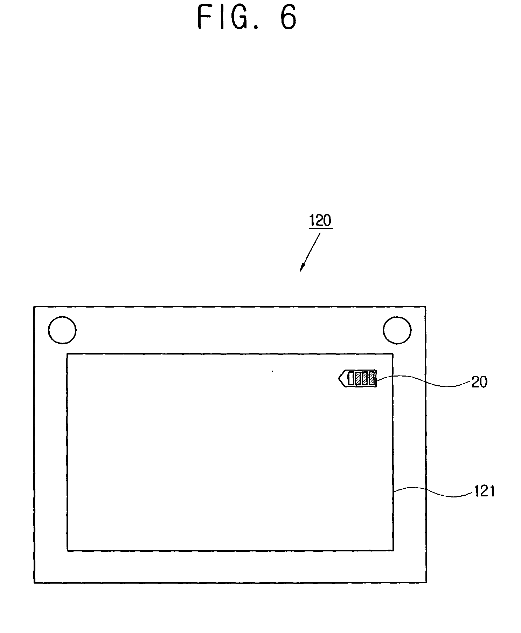

FIGS. 5 and 6 are views illustrating an operating condition of the display part 121 of the display system of FIG.1 to display a warning message 10.

In this case, an OSD part may be further provided to display the warning message 10. The warning message 10 can be generated according to a controlling process as illustrated in FIG. 4.

Meanwhile, the controller 150 of FIG. 3 may directly display information about the intensity of the supersonic wave signal or the infrared ray signal sensed through the sensor 127 on the display part 121. In other words, as illustrated in FIG. 6, by displaying the battery remaining capacity of the pen mouse 140 on a corner portion of the display part 121, a user can easily check the remaining capacity of the battery 141.

Also, in a case that another image 20 representing the battery remaining capacity is displayed through the display part 121, the warning message 10 as illustrated in FIG. 5 may be displayed on the display part 121 when the battery remaining capacity of the pen mouse 140 is measured to be insufficient. When the warning message 10 or another image 20 is displayed on the display part 121, the warning message 10 or another image 20 can be superimposed with a main image 10a generated according to an image signal of the display apparatus 120 and the computer 100 on the display part 121.

In addition, as necessary, when the battery capacity of the pen mouse 140 is measured to be insufficient, the controller 150 may provide a sound output to inform the user of lack of the battery capacity through a sound output device, such as a speaker (not shown) provided in the computer 100 or the display apparatus 120.

As described above, in the embodiment of the present general inventive concept, transmitting and receiving of the information is made through the supersonic wave signal and the infrared ray signal between the pen mouse 140 and the sensor part 127. However, the present general inventive concept is not limited thereto, but may be applied to other types of sound waves or signals.

In addition, the present general inventive concept is not limited to the computer 100 as described above, but may be applied to not only a display system such as a lap top computer, but also other kinds of display apparatuses such as a television, and a projecting screen, as necessary.

As described above, the display apparatus according to the present general inventive concept is provided with the sensor part to generate a position signal of the input device, and a controller to operate the position of the input device from the signal of the sensor part and to be displayed on the display part, thereby directly inputting on a displayed screen by using the input device. Also, such a display system may be additionally applied to a display apparatus, such as a monitor, a television, and a projecting screen and a lap top computer.

Also, in the display apparatus according to the present general inventive concept, a warning message informing lack of the battery capacity in the input device, such as a pen mouse, by a controller is displayed on the display part, thereby enabling the user to take a proper action in a case that the pen mouse is malfunctioned due to the lack of the battery capacity in the input device. Also, the remaining battery capacity in the input device is displayed on the display part by the controller, thereby improving a convenience for the user.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A display apparatus usable with an input device, comprising:
a display part;
an input device to generate a position signal on the display part;
a sensor part to receive the position signal from the input device; and
a controller to display a warning message when intensity of the position signal from the sensor part is less than a predetermined reference level.

2. The display apparatus according to claim 1, wherein the controller further comprises a second controller to receive the signal from the sensor part, and to generate and output position data about the input device.

3. The display apparatus according to claim 1, wherein the position signal comprises at least one of a supersonic wave signal and an infrared ray signal generated by the input device.

4. The display apparatus according to claim 1, wherein the controller receives position data from the sensor part and displays the warning message on the display part according to the position data when the intensity of the position signal is less than the predetermined reference level.

5. The display apparatus according to claim 1, wherein the input device comprises a battery and the warning message represents information about a battery capacity of the battery of the input device.

6. The display apparatus according to claim 1, further comprises:
an OSD part to display the warning message outputted from the controller.

7. The display apparatus according to claim 1, wherein the display part comprises a protecting window with which the input device contacts to generate the position signal.

8. A display system usable with an input device and a display apparatus, the display apparatus preferably according to any of claims 1-7, the system comprising:
a sensor part to receive a position signal generated from an external input device; and
a controller to generate a warning message when intensity of the received position signal from the sensor part is less than a predetermined reference level.

9. The display system according to claim 8, wherein the external input device transmits a wireless signal to the sensor part as the position signal.

10. The display system according to claim 9, wherein the external input device comprises a battery to supply a power to the external input device, and the intensity represents a level of the power of the battery.

11. The display system according to claim 8, wherein the display apparatus comprises a display part formed with the sensor part, and the controller controls the display part to display an image representing the warning message.

12. The display system according to claim 8, wherein the controller controls the display apparatus to generate sound corresponding to the warning message.

13. The display system according to claim 8, wherein the sensor part and the controller are disposed in the display apparatus.

14. The display system according to claim 8, wherein the display apparatus displays a main image, and the warning message is displayed together with the main image on the display apparatus.

15. The display system according to claim 8, further comprising:
a computer to receive a signal representing the position signal from the sensor part,
wherein the controller controls the computer to generate an image corresponding to the warning message according to the received signal.

16. The display system according to claim 15, wherein the controller controls the computer to generate sound corresponding to the warning message.

17. The display system according to claim 8, further comprising:
a computer provided with the controller connected to the sensor part through an external signal line to receive the position signal from the sensor part,
wherein the controller controls the computer to generate an image corresponding to the warning message according to the received signal.

18. The display system according to claim 8, further comprising:
a display apparatus provided with the sensor part and the controller; and
a computer connected to the controller through an external signal line to generate an image corresponding to the warning message.

19. The display system according to claim 8, further comprising:
a display apparatus provided with the sensor part; and
a computer provided with the controller connected to the display apparatus through an external signal line to generate an image corresponding to the warning message.

20. The display system according to claim 8, wherein the external input device comprises a pen mouse to generate a wireless signal to the sensor part as the position signal.

21. A method of a display system, preferably a display system as claimed in any of claims 8-20, usable with an input device, the method comprising:
receiving a position signal generated from an external input device; and
generating a warning message when intensity of the received position signal from the sensor part is less than a predetermined reference level.
